# FASCICULE DE BREVET EUROPEEN

(11) **EP 1 246 421 B1**
(45) Date de publication et mention de la délivrance du brevet: **13.06.2007**
(21) Numéro de dépôt: 02364015.4
(22) Date de dépôt: 20.03.2002
(51) Int. Cl.: H04L 27/14, H04L 27/152

(54) **Récepteur de signaux modulés en fréquence avec démodulateur numérique**
FM-Empfänger mit numerischem Demodulator
Receiver of frequency modulated signals with digital demodulator

(30) Priorité: 21.03.2001 FR 0103788
(43) Date de publication de la demande: 02.10.2002
(73) Titulaire: STMicroelectronics S.A., 92120 Montrouge (FR)
(72) Inventeur: Joisson, Marc, 56100 Lorient (FR); Garcia, Luc, 56100 Lorient (FR); Gens, Marc, 56100 Lorient (FR)
(74) Mandataire: Bentz, Jean-Paul

(56) Documents cités:
- US-A- 4 813 058
- US-A- 5 375 146
- US-A- 5 402 446
- US-A- 6 067 319

## Description

La présente invention concerne un récepteur de signaux modulés en fréquence avec démodulateur numérique. L'invention trouve son application dans tous systèmes de liaison radio.

La technique de modulation de fréquence ou de modulation par déplacement de fréquence (Frequency Shift Keying en langue anglaise) est communément employée pour transmettre un signal numérique d'un émetteur vers un récepteur en associant une fréquence de modulation particulière à chaque valeur numérique du signal numérique. Dans le cas d'un signal binaire, une fréquence f1 est attribuée à la valeur 0 et une fréquence f2 à la valeur 1. L'émetteur comporte alors un modulateur qui émet pour chaque valeur numérique la fréquence de modulation qui lui est associée et le récepteur comporte un démodulateur numérique chargé de restituer les valeurs binaires du signal numérique en discriminant les fréquences de modulation du signal modulé reçu.

La démodulation de tels signaux consiste par exemple à mesurer la période du signal reçu en l'échantillonnant à une fréquence très élevée et à comparer la valeur de période mesurée à des valeurs de périodes correspondant aux différentes fréquences de modulation. La précision de la mesure nécessite que la fréquence du signal d'échantillonnage soit très supérieure aux fréquences de modulation du signal reçu, à savoir aux fréquences f1 et f2 dans le cas d'un signal binaire. La fréquence d'échantillonnage est alors d'autant plus élevée que les fréquences f1 et f2 sont élevées. La fréquence d'échantillonnage doit également être d'autant plus élevée que les fréquences f1 et f2 sont proches pour que le démodulateur puisse correctement les discriminer. Aussi, pour que la fréquence d'échantillonnage nécessaire ne soit pas trop élevée, la fréquence du signal reçu est généralement abaissée à une fréquence intermédiaire de plus faible valeur à l'aide d'un bloc de transposition en fréquence placé en amont du démodulateur numérique dans le récepteur.

Pour générer le signal d'échantillonnage, le récepteur comporte usuellement un circuit d'horloge affecté exclusivement à cet usage. La présence d'un tel circuit d'horloge présente les inconvénients suivants : il occupe une surface non négligeable sur silicium et consomme du courant; de plus, il peut créer des bruits parasites pour les autres éléments du récepteur.

Un but de l'invention est de proposer un récepteur de signaux modulés en fréquence (ou par déplacement de fréquence), qui soit de conception simple, de taille et de coût réduits, en vue de sa réalisation en circuit intégré.

On propose, selon l'invention, de produire le signal d'échantillonnage à l'aide de l'oscillateur local de l'étage de transposition en fréquence du récepteur. Cet oscillateur local est chargé habituellement de générer un signal de fréquence relativement élevée (de l'ordre de plusieurs gigahertz) pour transposer le signal reçu à une fréquence intermédiaire plus faible. Cet oscillateur local est donc apte à produire un signal d'échantillonnage de fréquence suffisamment élevée pour mesurer la période du signal reçu transposé en fréquence.

Aussi, l'invention concerne un récepteur d'un signal modulé en fréquence représentatif d'un signal numérique comportant un bloc de transposition en fréquence pour abaisser la fréquence dudit signal modulé en fréquence et un démodulateur numérique pour regénérer ledit signal numérique à partir dudit signal transposé en fréquence, ledit signal transposé en fréquence étant échantillonné dans ledit démodulateur numérique au rythme d'un signal d'échantillonnage, ledit bloc de transposition en fréquence comprenant un oscillateur local pour générer un signal d'oscillateur local destiné à abaisser la fréquence dudit signal modulé en fréquence, caractérisé en ce que le signal d'échantillonnage est généré par l'oscillateur local dudit bloc de transposition en fréquence.

Un tel récepteur permet de s'affranchir de la présence d'un circuit d'horloge dédié pour générer le signal d'échantillonnage. L'oscillateur local du bloc de transposition en fréquence comprend un oscillateur de référence et une boucle de verrouillage de phase dont la rétroaction comprend des premier et second circuits diviseurs de fréquence montés en cascade. Le signal d'échantillonnage est alors délivré par le premier circuit diviseur de fréquence.

D'autres caractéristiques et avantages de l'invention apparaîtront à la lecture de la description détaillée qui suit et qui est faite en référence aux dessins annexés, parmi lesquels :
- la figure 1 représente le schéma général d'un récepteur selon l'invention; et
- la figure 2 représente le schéma plus détaillé d'un récepteur dans le cas d'une démodulation de fréquence avec saut de fréquence (frequency hoping en langue anglaise).

Selon l'invention, le signal d'échantillonnage fourni au démodulateur numérique est généré par l'oscillateur local du bloc de transposition en fréquence du récepteur. En effet, cet oscillateur local est usuellement utilisé pour générer un signal ayant une fréquence de quelques gigahertz pour abaisser la fréquence du signal reçu par le récepteur à une fréquence intermédiaire de quelques mégahertz. Cet oscillateur local est donc apte à générer un signal d'échantillonnage ayant une fréquence suffisamment élevée pour échantillonner le signal modulé en fréquence préalablement transposé à la fréquence intermédiaire.

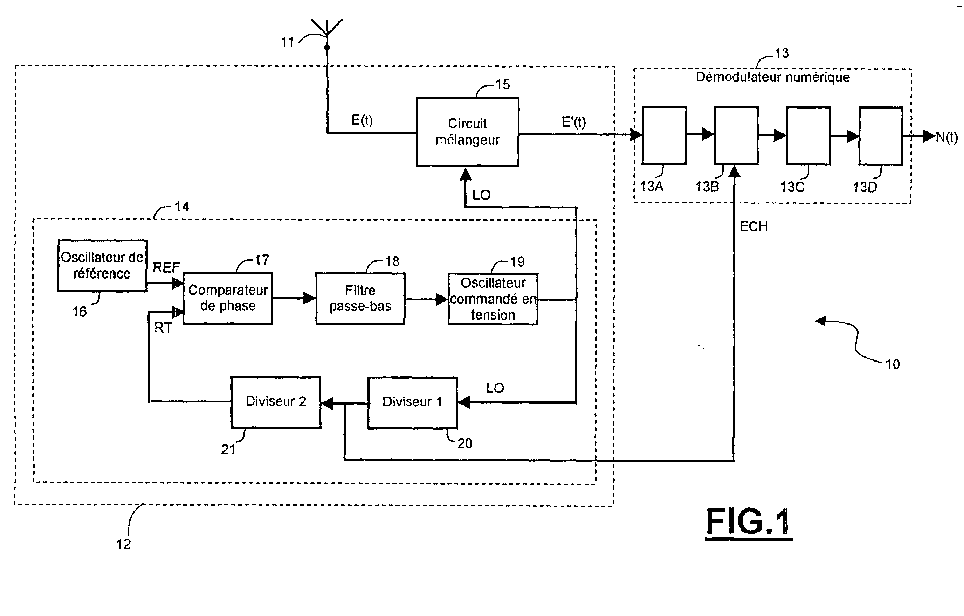

La figure 1 montre un schéma d'un récepteur 10 conforme à l'invention. Ce récepteur comporte d'une manière générale une antenne 11 pour capter un signal analogique E(t) modulé par déplacement de fréquence, un premier bloc de transposition en fréquence 12 pour abaisser la fréquence du signal E(t) et délivrer un signal E'(t) et un démodulateur numérique 13 pour démoduler le signal E'(t) et délivrer un signal numérique N(t).

Pour abaisser la fréquence du signal E(t), le bloc 12 comprend un oscillateur local 14 qui génère un signal d'oscillateur local LO de fréquence f_{LO} et un circuit mélangeur 15 qui multiplie le signal E(t) avec le signal LO. Dans ce bloc, la fréquence du signal E(t) est abaissée de la valeur f_{LO}.

Selon l'invention, cet oscillateur local est également prévu pour générer un signal d'échantillonnage ECH destiné au démodulateur numérique.

Dans la forme de réalisation représentée à la figure 1, l'oscillateur local 14 comprend un oscillateur de référence 16 délivrant un signal de référence REF et une boucle de verrouillage de phase. La boucle de verrouillage de phase comprend un comparateur de phase 17 à deux entrées recevant sur une première entrée le signal de référence REF et sur une deuxième entrée un signal de boucle RT. Le signal à la sortie du comparateur de phase 17 est filtré par un filtre passe-bas 18 puis traité par un oscillateur commandé en tension 19. Le signal délivré par l'oscillateur commandé en tension 19 est divisé en fréquence par deux diviseurs de fréquence, 20 et 21, montés en cascade. Le signal délivré par le diviseur de fréquence 21 correspond au signal de boucle RT et est donc fourni à la deuxième entrée du comparateur de phase 17.

Le signal LO appliqué sur la deuxième entrée du circuit mélangeur 15 est le signal délivré par l'oscillateur commandé en tension 19. Le fonctionnement de cette boucle de verrouillage de phase est bien connu de l'homme du métier.

Le signal d'échantillonnage ECH est le signal délivré par le diviseur de fréquence 20. La fréquence de ce signal est inférieure à celle du signal LO mais reste cependant suffisamment élevée pour échantillonner le signal E'(t). La fréquence de ce signal peut être par ailleurs aisément réglée en modifiant le rapport de division des diviseurs de fréquence 20 et 21.

Le signal d'échantillonnage est utilisé par le démodulateur numérique 13 pour échantillonner le signal E'(t). Il existe plusieurs architectures possibles de démodulateur numérique. Dans l'exemple de la figure 1, le démodulateur comprend des moyens 13A pour convertir le signal E'(t) en un signal logique, des moyens 13B pour échantillonner et détecter les transitions du signal logique (à savoir les fronts montants ou les fronts descendants de celui-ci), des moyens 13C pour mesurer le temps écoulé entre deux fronts montants ou deux fronts descendants consécutifs du signal logique et des moyens 13D pour comparer les temps mesurés avec des valeurs de période correspondant à des valeurs numériques particulières et reconstituer ainsi le signal numérique avant modulation noté N(t).

En cas de démodulation par déplacement de fréquence (Frequency Shift Keying Démodulation en langue anglaise) avec saut de fréquence (Fréquency Hoping en langue anglaise), la fréquence du signal LO est changée périodiquement de manière aléatoire.

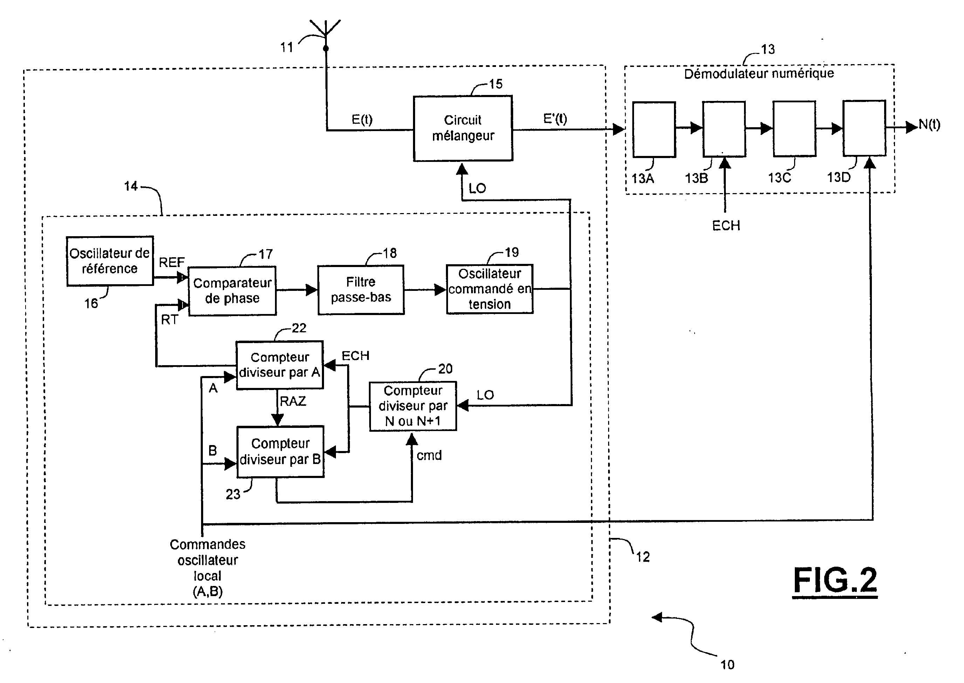

Ce cas est illustré par la figure 2. Des valeurs de commande A et B sont prévues pour changer périodiquement la fréquence du signal LO. Dans cette figure, le diviseur de fréquence 20 est un compteur diviseur destiné à diviser la fréquence du signal LO soit par N, soit par N+1, N étant un nombre entier. Ce compteur diviseur délivre le signal d'échantillonnage ECH. Le diviseur de fréquence 21 est formé de deux compteurs diviseurs 22 et 23. Ces compteurs diviseurs sont des compteurs préréglables dont la valeur limite de comptage peut être modifiée. Le compteur diviseur 22 est prévu pour compter jusqu'à A et le compteur diviseur 23 jusqu'à B, avec A>B.

Le compteur diviseur 20 est agencé avec les autres compteurs 22 et 23 de manière à diviser la fréquence du signal LO par N+1 tant que le compteur 23 n'a pas atteint la valeur B et à diviser ensuite la fréquence du signal LO par N, jusqu'à ce que le compteur 22 atteigne la valeur A.

Le compteur diviseur 20 comprend une entrée de commande pour recevoir un signal de commande cmd provenant du compteur 23. Tant que le compteur 23 n'a pas atteint la valeur B, le signal cmd présente un premier état logique; le circuit diviseur 20 divise alors le signal LO par N+1. Les compteurs 22 et 23 sont chargés de compter les impulsions du signal ECH délivré par le circuit diviseur 20. Quand le compteur 23 atteint la valeur B, le signal de commande cmd change d'état logique et le circuit diviseur 20 divise alors le signal LO par N. Le compteur 22 continue à compter jusqu'à atteindre la valeur A; il remet alors à zéro par le signal RAZ le compteur 23. Le signal RT est le signal délivré par le compteur 22.

Dans ce cas de démodulation avec saut de fréquence, la fréquence instantanée du signal d'échantillonnage ECH est égale tantôt à f_{LO}/N, tantôt à f_{LO}/N+1.

La valeur moyenne de la fréquence du signal d'échantillonnage est cependant connue. Elle est égale à : F_{ECH} = A.f_{RT} = A.f_{LO}/[(A-B).N+B. (N+1)] = A.f_{LO}/(A.N+B)

L'écart entre la valeur instantanée et la valeur moyenne de la fréquence du signal d'échantillonnage peut être considéré comme un bruit et n'est pas gênant lorsque les conditions suivantes sont remplies :
■ |f1-f2| >> (f_{LO}/N) - (f_{LO}/(N+1))
■ |f1| >> f_{LO}/N

Dans ce cadre de la démodulation de fréquence avec saut de fréquence, les valeurs de commande A et B sont également fournies aux moyens de comparaison 13D du démodulateur numérique 13 pour que les valeurs de période représentatives de valeurs numériques tiennent compte des changements périodiques des valeurs A et B.

## Revendications

1. Récepteur (10) d'un signal modulé en fréquence représentatif d'un signal numérique comportant un bloc de transposition en fréquence (12) pour abaisser la fréquence dudit signal modulé en fréquence et un démodulateur numérique (13) pour regénérer ledit signal numérique à partir dudit signal transposé en fréquence, ledit signal transposé en fréquence étant échantillonné dans ledit démodulateur numérique au rythme d'un signal d'échantillonnage (ECH), ledit bloc de transposition en fréquence comprenant un oscillateur local (14) pour générer un signal d'oscillateur local (LO) destiné à abaisser la fréquence dudit signal modulé en fréquence, **caractérisé en ce que** l'oscillateur local (14) dudit bloc de transposition en fréquence (12) est adapté à générer ledit signal d'échantillonnage (ECH).

2. Récepteur selon la revendication 1, **caractérisé en ce que** l'oscillateur local (14) comporte un oscillateur de référence (16) et une boucle de verrouillage de phase dont la rétroaction comprend des premier et second circuits diviseurs de fréquence (20,21) montés en cascade et **en ce que** le signal d'échantillonnage (ECH) est délivré par le premier circuit diviseur de fréquence (20).

3. Récepteur selon l'une des revendications précédentes **caractérisé en ce qu**'il est réalisé en circuit intégré.

## Claims

1. A receiver (10) of a frequency-modulated signal representing a digital signal, the receiver comprising a frequency-transposition unit (12) for lowering the frequency of the frequency-modulated signal and a digital demodulator (13) for regenerating the digital signal from the frequency-transposed signal, the frequency-transposed signal being sampled in the digital demodulator at the rate of a sampling signal (ECH), the frequency transposed unit including a local oscillator (14) for generating a local oscillator signal (10) used for lowering the frequency of the frequency-modulated signal, **characterized in that** the local oscillator (14) of the frequency-transposition unit (12) is adapted to generate said sampling signal (ECH).

2. The receiver according to claim 1, **characterised in that** the local oscillator (14) comprises:
a reference oscillator (16) and a phase-locked loop having a feedback portion that includes first and second cascade-connected frequency-divider circuits (20, 21), and **in that** the sampling signal (ECH) is delivered by the first frequency-divider circuit (20).

3. The receiver according to any one of the preceding claims, **characterised in that** it is realised in integrated circuit form.

## Patentansprüche

1. Empfänger (10) für ein frequenzmoduliertes Signal, das für ein digitales Signal repräsentativ ist, mit einem Frequenz-Transponierblock (12), um die Frequenz des frequenzmodulierten Signals zu senken, und einem digitalen Demodulator (13), um das digitale Signal aus dem frequenztransponierten Signal wieder zu erstellen, wobei das frequenztransponierte Signal in dem digitalen Demodulator im Takt eines Stichprobensignals (ECH) ausgewählt wird, wobei der Frequenz-Transponierblock einen Lokaloszillator (14) umfasst, um ein Lokaloszillatorsignal (LO) zu erzeugen, das die Frequenz des frequenzmodulierten Signals senkt, **dadurch gekennzeichnet, dass** der Lokaloszillator (14) des Frequenz-Transponierblocks (12) so ausgebildet ist, dass dieser das Stichprobensignal (ECH) erzeugt.

2. Empfänger nach Anspruch 1, **dadurch gekennzeichnet dass** der Lokaloszillator (14) einen Referenzoszillator (16) und eine phasenverriegelte Schleife umfasst, deren Rückwirkung eine erste und zweite Frequenzteilerschaltung (20,21) umfasst, die kaskadenartig eingesetzt sind, und dass das Stichprobensignal (ECH) durch die erste Frequenzteilerschaltung (20) geliefert wird.

3. Empfänger nach einem der vorhergehenden Ansprüche, **dadurch gekennzeichnet, dass** dieser als ein integrierter Schaltkreis ausgeführt ist.
